# EUROPÄISCHE PATENTSCHRIFT

(11) **EP 2 870 354 B1**
(45) Veröffentlichungstag und Bekanntmachung des Hinweises auf die Patenterteilung: **19.07.2017**
(21) Anmeldenummer: 13719447.8
(22) Anmeldetag: 18.04.2013
(51) Int. Cl.: F03D 17/00

(54) **ÜBERWACHTE BAUTEILVERBINDUNG, WINDENERGIEANLAGE, VERFAHREN ZUR ÜBERWACHUNG EINER BAUTEILVERBINDUNG AUF EIN UNGEWOLLTES LÖSEN DER BAUTEILVERBINDUNG IM VERBUNDENEN ZUSTAND**
MONITORED COMPONENT CONNECTION, WIND POWER SYSTEM, METHOD FOR MONITORING A COMPONENT CONNECTION FOR INADVERTENT LOOSENING OF THE COMPONENT CONNECTION IN THE CONNECTED STATE
CONNEXION DE COMPOSANTS CONTRÔLÉE, ÉOLIENNE, PROCÉDÉ POUR CONTRÔLER UNE CONNEXION DE COMPOSANTS POUR DÉTECTER UNE SÉPARATION NON SOUHAITÉE DES COMPOSANTS UNE FOIS LA CONNEXION RÉALISÉE

(30) Priorität: 03.07.2012 DE 102012211566
(43) Veröffentlichungstag der Anmeldung: 13.05.2015
(73) Patentinhaber: Wobben Properties GmbH, 26607 Aurich (DE)
(72) Erfinder: JEPSEN, Torsten, 26603 Aurich (DE); KELLING, Ralf, 26556 Eversmeer (DE)
(74) Vertreter: Eisenführ Speiser
(86) Internationale Anmeldenummer: PCT/EP2013/058088
(87) Internationale Veröffentlichungsnummer: WO 2014/005735

(56) Entgegenhaltungen:
- EP-A2- 0 380 967
- WO-A1-2009/065174
- GB-A- 564 745
- GB-A- 2 395 795
- US-A- 3 820 381
- US-A- 5 770 794
- US-A- 6 059 500
- US-A1- 2002 092 355
- T Verbruggen: "wind turbine operation & maintenance based on condition monitoring", , 30. April 2003 (2003-04-30), XP055021054, Gefunden im Internet: URL:ftp://ecn.nl/pub/www/library/report/20 03/c03047.pdf [gefunden am 2012-03-06]

## Beschreibung

Die Erfindung betrifft eine überwachte Bauteilverbindung nach dem Oberbegriff des Anspruchs 1 sowie eine Windenergieanlage. Weiter betrifft die Erfindung ein Verfahren zur Überwachung einer Bauteilverbindung auf eine ungewollte Verbindungsschwäche der Bauteilverbindung im verbundenen Zustand und ein Prüfnetz.

Es ist grundsätzlich bekannt, besonderen Belastungen ausgesetzte Bauteile oder Bauteilverbindungen gesonderten Prüfungen und Tests zu unterziehen nachdem diese ausgebaut wurden. Sollte das Bauteil oder die Bauteilverbindung funktionstüchtig sein, wird diese nach einem solchen Test oder Prüfung wieder in eine Anlage oder andere technische Einrichtung eingebaut. Diese Herangehensweise eignet sich weniger für technische Einrichtungen oder Anlagen, bei denen ein Ausbau eines Bauteils bzw. einer Bauteilverbindung nicht nur mit hohen Kosten verbunden wäre, sondern darüberhinaus bereits technisch aufwendig bzw. gegebenenfalls sogar nachteilig für den Betrieb der technischen Einrichtung oder Anlage. Dies gilt insbesondere für drehende Bauteile oder Lagerbauteile für drehende Teile; insbesondere bei einem Lagerbauteil ist davon auszugehen, dass sich dieses im Betrieb eingespielt hat und ein Ausbau und ein anschließender neuerlicher Einbau eher nachteilig für den weiteren Betrieb der Einrichtung oder Anlage sein könnte.

Das Europäische Patentamt hat folgenden Stand der Technik recherchiert: US 6,059,500 A.

Wünschenswert ist eine in situ überwachte Bauteilverbindung bzw. ein Verfahren zur Überwachung einer Bauteilverbindung auf eine ungewollte Verbindungsschwäche der Bauteilverbindung im verbundenen Zustand; insbesondere derart, dass die Überwachung während des Betriebs der Anlage, in welcher das Bauteil verbaut ist, möglich ist.

An dieser Stelle setzt die Erfindung ein, deren Aufgabe es ist, eine überwachte Bauteilverbindung, eine Windenergieanlage und ein Verfahren zur Überwachung einer Bauteilverbindung auf eine ungewollte Verbindungsschwäche der Bauteilverbindung im verbundenen Zustand anzugeben, die besonders vorteilhaft realisierbar ist. Insbesondere soll die Bauteilverbindung, Windenergieanlage bzw. das Verfahren vorhandene Gegebenheiten bei einer Anlage, insbesondere Windenergieanlage, nutzen und dennoch eine vorteilhafte Realisierung ermöglichen. Weitere Aufgabe der Erfindung ist es, die Bauteilverbindung, Windenergieanlage und das Verfahren zur Überwachung möglichst einfach und dennoch verlässlich zu realisieren.

Die Aufgabe betreffend die Bauteilverbindung wird durch die Erfindung mittels einer überwachten Bauteilverbindung des Anspruchs 1 gelöst. Die Erfindung führt auch auf eine Windenergieanlage des Anspruchs 4 und ein Prüfnetz des Anspruchs 11. Die Aufgabe betreffend das Verfahren wird durch die Erfindung mit einem Verfahren des Anspruchs 7 gelöst.

Die Erfindung geht von der Überlegung aus, dass eine Bauteilverbindung wie sie für ein Überwachungsverfahren der genannten Art in Frage kommt aus einem ersten, ein Halteteil bildendem Bauteil und einem zweiten, ein Aufnahmeteil bildendem Bauteil und einem Verbindungsteil gebildet ist, welches das zweite Bauteil an dem ersten Bauteil im verbundenen Zustand hält. Die Erfindung hat erkannt, dass eine Verbindungsaufnahme des Aufnahmeteils, in welche das Verbindungsteil eingreift gemäß dem Konzept der Erfindung vorteilhaft genutzt werden kann, zum Überwachen auf eine ungewollte Verbindungsschwäche der Bauteilverbindung im verbundenem Zustand. Die Erfindung hat erkannt, dass sich die Verbindungsaufnahme mit einem Prüfdruck beaufschlagen lässt und der Prüfdruck auf eine Fehlerabweichung überwachbar ist, die ausreichend ist, eine Verbindungsschwäche der Bauteilverbindung im verbundenen Zustand anzuzeigen.

Mit besonderem Vorteil nutzt die Erfindung die Verbindungsaufnahme in synergetischer Weise nicht nur zur Verbindung des ersten und zweiten Bauteils, sondern im Rahmen der Überwachung zur Beaufschlagung mit einem Prüfdruck. Dieses Konzept hat zudem den Vorteil, dass eine Prüfdrucküberwachung praktisch vom gleichen Zugang zur Verbindungsaufnahme realisiert werden kann, wie eine Beaufschlagung mit Prüfdruck. Mit anderen Worten ist das Konzept der Erfindung damit vergleichsweise einfach realisierbar, da weitere Sensoren oder Prüfmerkmale am Bauteil selbst nicht erforderlich sind; zudem werden vorhandene Gegebenheit bei einer Bauteilverbindung zur Überwachung und Prüfung genutzt ohne die Bauteilverbindung einzuschränken oder deutlich zu schwächen.

Das Konzept der Erfindung erweist sich als besonders wirksam bei einer Windenergieanlage hinsichtlich der Überwachung einer Bauteilverbindung zwischen Rotor und Nabe, insbesondere zwischen einem Blattflansch und einem Blattflanschlager. Es zeigt sich, dass in diesem Fall ein Ausbau zur Prüfung eines Blattflansches und/oder Blattflanschlagers und/oder eines Verbindungsteils nur mit grossem Aufwand in Frage käme.

Vorteilhafter Weiterbildungen der Erfindung sind den Unteransprüchen zu entnehmen und geben einzelne vorteilhafte Möglichkeiten an, das erläuterte Konzept im Rahmen der Aufgabenstellung sowie hinsichtlich weiterer Vorteile zu realisieren.

Insbesondere hat sich im Rahmen des Konzepts eine Weiterbildung als vorteilhaft erwiesen, in der eine Rissüberwachung von Bauteilverschraubungen in Verbindung mit Sacklochverschraubungen erfolgt. Dies betrifft insbesondere Kugeldrehverbindungen oder Rollendrehverbindungen oder dergleichen Lager betreffende Bauteilverbindungen oder deren Verbindungsteile, nämlich Schrauben, Bolzen oder Schraubstangen oder dergleichen. Unter Riss ist insbesondere eine Rissöffnung bzw. ein klaffender Riss oder dergleichen Strukturöffnungen zu verstehen, die in der Tat die Funktion des Bauteils in Frage stellen können. Insofern erweist sich die Überwachungsfunktion der überwachten Bauteilverbindung bzw. das Verfahren zur Überwachung als Sicherheitsmaßnahme wesentlich, um schwerere Schäden, gegebenenfalls sogar eine Zerstörung einer technischen Vorrichtung oder Anlage mit der überwachten Bauteilverbindung, zu vermeiden.

Es hat sich gezeigt, dass im Rahmen einer Weiterbildung die Detektion von Ermüdungsrissen insbesondere in einem Sacklochbereich eines verschraubten Bauteils oder der Schraube selbst besonders bewährt, um größere Schäden einer technischen Vorrichtung oder Anlage zu vermeiden. Insbesondere sollen die vorgenannten Maßnahmen des Konzepts der Erfindung bzw. einer der Weiterbildungen vor einem Komplettausfall einer Anlage oder technischen Vorrichtung festgestellt werden.

Besonders bevorzugt ist eine Druckbeaufschlagung, insbesondere per Überdruck oder Unterdruck, eines Gewindesacklochs. Im Ergebnis würden Risse, klaffende Risse oder andere Schadöffnungen dazu Leckagen führen, die sich durch eine Drucküberwachung detektieren lassen. Insofern ist unter einer Fehlerabweichung zum Prüfdruck jede Abweichung von einem definierten Druck zu verstehen, die ausreichend ist, eine Verbindungsschwäche der Bauteilverbindung im verbundenen Zustand anzuzeigen. Unter einer Verbindungsschwäche der Bauteilverbindung ist grundsätzlich jede, die Bauteilverbindung lösende, öffnende bzw. teilweise lockernder Rissspalt oder Öffnungsbildung zu verstehen.

Insbesondere kann im Rahmen des Überwachungsverfahrens eine zyklische Druckbeaufschlagung, z. B. täglich einmal, erfolgen, um eine praktisch ständige Überwachung mit regelmäßigen Überwachungszyklen zu ermöglichen.

Insbesondere kann eine Druckzuführung seitlich durch geringer belastete Umgebungsbauteile oder zentral durch hohl gebohrte Verbindungsteile oder das Verbindungsteil wie ein Schraubengewindebolzen oder dergleichen erfolgen.

Im Rahmen einer Weiterbildung sind eine oder mehrere Dichtungen oder Abdichtungen vorgesehen, um die Verbindungsaufnahme abzudichten, derart dass nur eine fehlerverursachte Leckage zu einer Prüfdruckbeeinträchtigung führen kann. Die Verbindungsaufnahme ist einer von einigen Bereichen besonders hoher Belastung oder Gefährdung welche allgemein vorteilhaft einem Prüfdruck ausgesetzt werden können; insbesondere damit überwachbar sind unter gegebenenfalls Feststellung einer Fehlerabweichung. Beispielsweise kann dazu eine Schraubverbindung, insbesondere ein Schraubbolzen oder eine Schraube an ihrem Gewindebereich in einer Verbindungsaufnahme abgedichtet sein, z.B. durch ein Dichtband oder dergleichen.

Die Bauteilüberwachung schützt im Betrieb vor Schadensfällen durch Bauteilversagen. Insbesondere im Falle einer Windenergieanlage kann beispielsweise ein Blattabriss oder dergleichen rechtzeitig verhindert werden. Erforderliche Überwachungsintervalle können gegebenenfalls verlängert oder verkürzt werden, je nach Alterungszustand einer Anlage.

Ausführungsbeispiele der Erfindung werden nun nachfolgend anhand der Zeichnung beschrieben. Diese sollen die Ausführungsbeispiele nicht nur notwendigerweise maßstäblich darstellen, vielmehr ist die Zeichnung, die zur Erläuterung dient, in schematisierter und/oder leicht verzerrter Form ausgeführt. Im Hinblick auf Ergänzungen der aus der Zeichnung unmittelbar erkennbaren Lehren wird auf dem einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Nicht-Gleichgewichtswerte offenbart und beliebig einsetzbar und beanspruchbar sein. Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:
- Fig. 1: schematisch eine Windenergieanlage;
- Fig. 2: ein Blattlager --vorliegend beispielhaft bei einer Windenergieanlage der Fig. 1-- in einer Draufsicht in Ansicht (B) und in einer seitlichen Schnittansicht entlang des Schnitts A--A in Ansicht (A);
- Fig. 3: das Detail X der Fig. 2 im Schnitt mit einem Blattflansch und einem Blattflanschlager in Ansicht (A) und in Ansicht (B) ein Verbindungsmittel in Form eines Schraubbolzens mit einer Durchführung und in Ansicht (C) ein gegen das Blattflanschlager und/oder dem Blattflansch abgedichtetes Gewinde der Gewindestange;
- Fig. 4: eine Variante zur Ausführungsform der Fig. 3;
- Fig. 5: eine weitere Variante zur Ausführungsform der Fig. 3 oder Fig. 4;
- Fig. 6: noch eine weitere Variante zu den Ausführungsformen der Fig. 3 bis Fig. 5;
- Fig. 7 (I): eine Schemazeichnung eines Prüf- und Überwachungssystems zur Überwachung einer Bauteilverbindung;
- Fig. 7 (II): eine besondere Ausführungsform des Prüf- und Überwachungssystems das bei einer überwachten Bauteilverbindung der Fig. 2 bis Fig. 6 angeschlossen werden kann;
- Fig. 8: ein als Flussdiagram dargestelltes erstes Ablaufschema (A) und eines zweiten Ablaufschema (B) eines Verfahrens zur Überwachung einer Bauteilverbindung auf eine ungewollte Verbindungsschwäche der Bauteilverbindung im verbundenen Zustand, insbesondere zur Detektion eines klaffenden Risses oder dergleichen schweren Strukturschwäche einer Bauteilverbindung, die das Halten der Bauteilverbindung unmittelbar gefährdet;
- Fig. 9 bis Fig. 12: weitere Varianten von überwachten Bauteilverbindungen --vorliegend beispielhaft bei einer Windenergieanlage-- zur Erläuterung anderer Möglichkeiten einer Überwachung der Bauteilverbindung auf eine ungewollte Verbindungsschwäche der Bauteilverbindung im verbundenen Zustand.

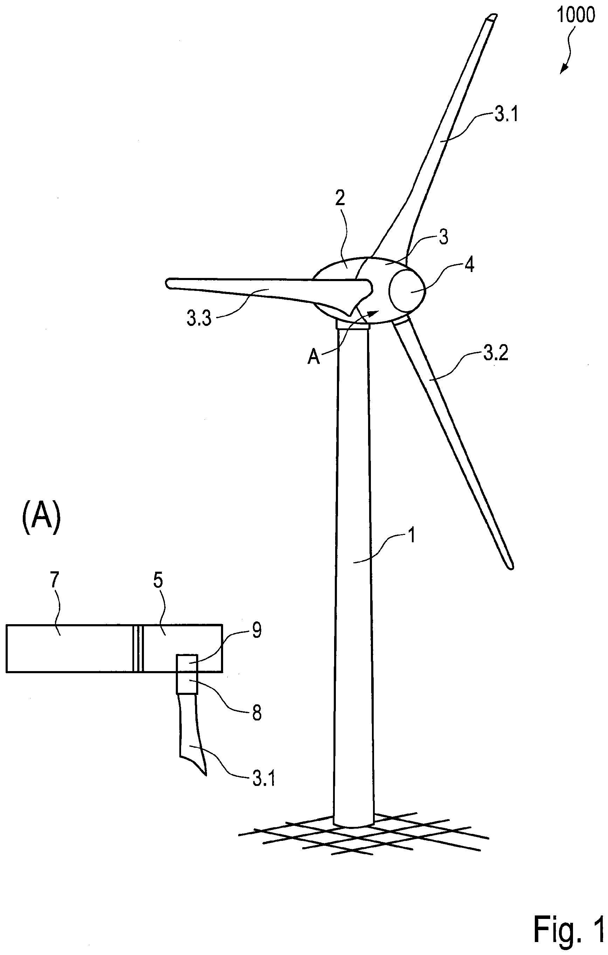

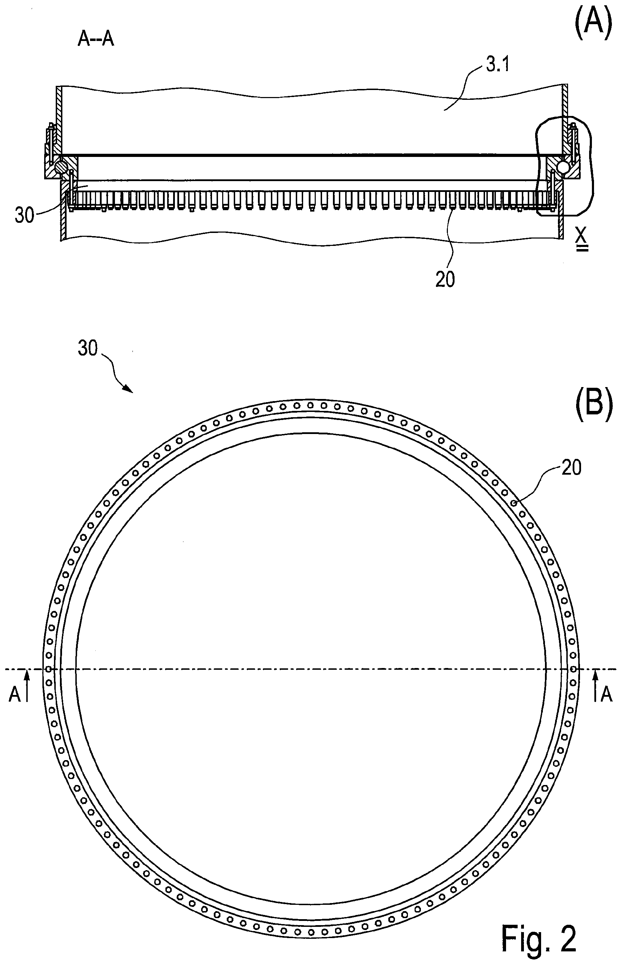

Fig. 1 zeigt eine Windenergieanlage 1000 mit einem Turm 1, einer Gondel 2 sowie einem Rotor 3; dieser mit einer vorliegenden Anzahl von drei Rotorblättern 3.1, 3.2, 3.3. Die Rotorblätter sind über einen Spinner 4 an eine im Detail der Fig. 1 gezeigte Nabe 5 angebunden, die einen Generator 7 zur Erzeugung von elektrischem Strom antreibt. Beispielhaft ist in Detail (A) der Fig. 1 die Anbringung eines Rotorblatts 3.1 an der Nabe 5 gezeigt. Das Rotorblatt 3.1 ist über ein Blattlager 8 mit einem Nabenadapter 9 verbunden. Die Ausführung dieser Verbindung ist in den folgenden Fig. 2 bis Fig. 12 näher erläutert.

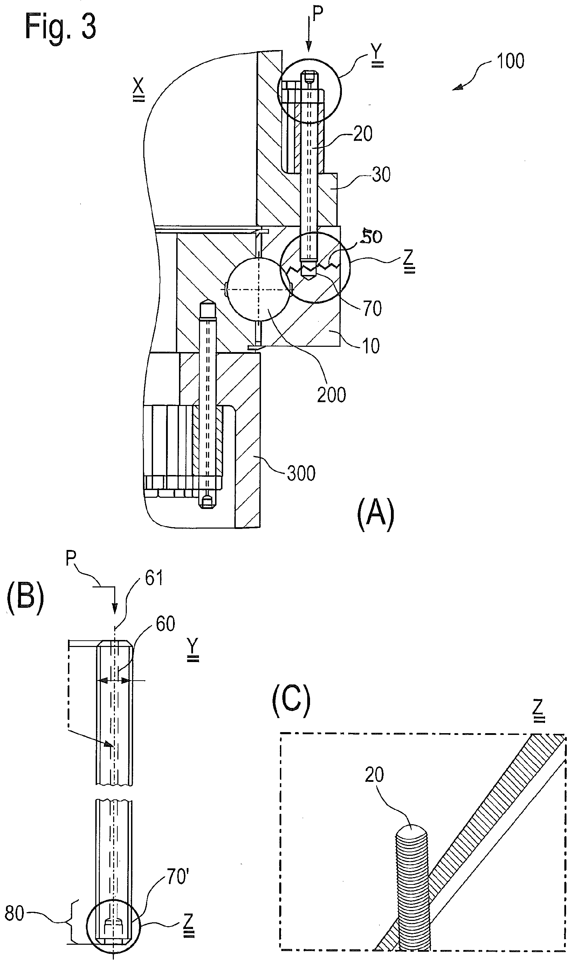

Fig. 2 zeigt dazu beispielhaft für das erste Blatt 3.1 in Ansicht (B) einen Blattflansch 30, der ein Halteteil als erstes Bauteil gemäß dem Konzept bildet. Weiter ist eine Reihe von Verbindungsteilen 20 in Form einer Vielzahl von Schrauben am Blattflansch ersichtlich. Die Verbindungsteile 20 sind in einer konzentrischen umfänglichen Reihe entlang des Blattflansches 30 angeordnet. Das Detail X in Fig. 2A ist vergrößert in Fig. 3A dargestellt und zeigt im Einzelnen das untere Ende des Blattflanschen 30 als Ausbildung des ein Halteteil bildenden ersten Bauteils sowie das Verbindungsteil 20 in Form des Schraubbolzens, der den Blattflansch 30 an dem Blattflanschlager 10 hält, als Ausbildungsform des zweiten, ein Aufnahmeteil bildenden Bauteils. Die überwachte Bauteilverbindung 100 wird vorliegend durch das Blattflanschlager 10, den Schraubbolzen 20 und den Blattflansch 30 gebildet. Anhand von Fig. 3A ist ersichtlich, dass sich insbesondere in einem unteren Bereich einer Verbindungsaufnahme 70 --hier ein Sackloch-- ein Riss 50 bilden kann, der zudem an sensibler Stelle des Blattflanschlagers entstehen kann wie dies im folgenden lediglich beispielhaft für die Bauteilverbindungen 100, 101..108 gezeigt ist. Die im folgenden erläuterten Maßnahmen sind dementsprechend gleichermaßen einsetzbar für andere Bauteilverbindungen, die nicht im einzelnen gezeigt sind. Vorliegend sind durchgehend für identische oder ähnliche Teile oder Teile identischer oder ähnlicher Funktion gleiche Bezugszeichen verwendet.

Dem Konzept in einer ersten Variante folgend ist das für das Detail Y der Fig. 3A in Fig. 3B und Fig. 3C näher dargestellte Verbindungsteil in Form des Schraubbolzens mit einer Durchführung 60 versehen, die sich entlang der Mittelachse 61 des Verbindungsteils 20 entlang der Gesamtlänge derselben erstreckt. Damit verbindet die Durchführung 60 den offenen Bereich des Sacklochs zu einem offenen Ende des Verbindungsteils 20. Am Grenzbereich 70' der Verbindungsaufnahme 70 --hier in Form des Sacklochs-- ist das Verbindungsteil 20, wie in Fig. 3C dargestellt, mit einer Dichtung --hier einem Teflonband-- abgedichtet. Vorliegend ist das Teflonband über das Gewinde des Gewindebolzens gewickelt und dichtet so in einem Dichtungsbereich 80 die Verbindungsaufnahme 70 ab. Ein über die Durchführung 60 eingebrachter Prüfdruck p verbleibt somit im unteren Bereich der Verbindungsaufnahme 70 in Form des Sacklochs und kann nur entweichen, wenn ein Riss oder dergleichen Öffnung 50 im Bereich des Sacklochs entsteht.

Das Blattflanschlager 10 ist vorliegend ein Ring, der ein Drehlager 200 trägt, das an den Nabenadapter 300 anschließt. Der Nabenadapter 300 wiederum verbindet zur in Fig. 1 schematisch dargestellten Nabe 5.

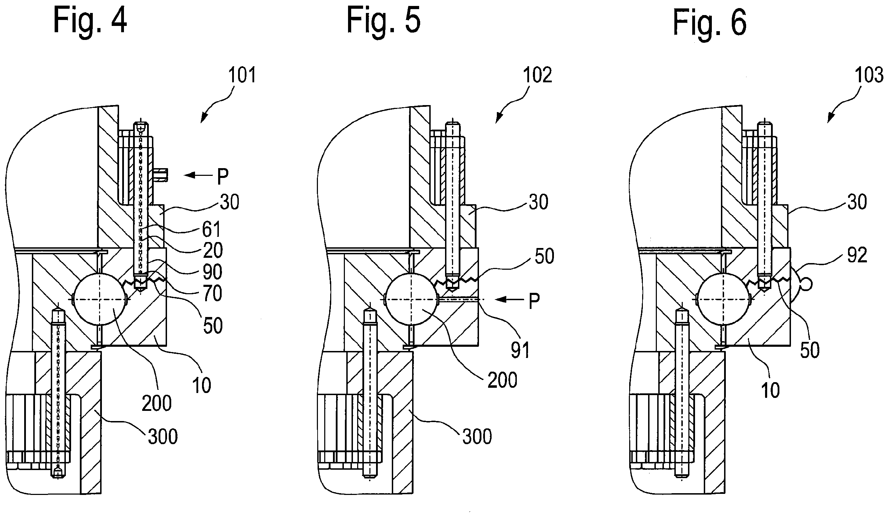

Fig. 4 zeigt in einer Variante mit Hinweis auf die gleichen Bezugszeichen der grundsätzlich identischen oder ähnlichen Merkmale sowie Merkmale identischer oder ähnlicher Funktion eine Bauteilverbindung 101, die wiederum mit Prüfdruck p überwacht werden kann. Dazu wird ein Prüfdruck P seitlich in einem Zwischenraum zwischen dem Verbindungsteil 20 und dem Blattflansch 30 eingebracht. Der Prüfdruck p gelangt im Grenzbereich 90 zwischen Verbindungsteil 20 und Blattflansch 30 zur Verbindungsaufnahme 70, nämlich an dessen unteren Ende zum Sackloch. Wiederum kann aufgrund einer Fehlerabweichung eine Rissbildung 50 detektiert werden.

Fig. 5 zeigt in einer weiteren Variante die Möglichkeit auf, dass bei einer Bauteilverbindung 102 ein Prüfdruck p direkt auf eine Schmierbohrung 91 aufbringbar ist. An einer oder an mehreren Stellen könnte über eine Schmierbohrung 91 bzw. über eine Anzahl von Schmierbohrungen ein Lagerinnenraum unter leichten Überdruck gesetzt werden. Über eine Prüfdruckerfassung des Prüfdrucks p kann ein Maß für einen Leckageluftstrom erhalten werden. Dies kann sich als vorteilhaft erweisen, da grundsätzlich die vorhandene Lagerabdichtung nur geringe Leckagen erwarten lässt.

Fig. 6 zeigt in einer weiteren Variante einer überwachten Bauteilverbindung 103 die Möglichkeit, einen Prüfdruck p über beaufschlagte Druck- oder Saugnäpfe 92 an anfälligen Bereichen einer Bauteilverbindung, vorliegend dem Blattflanschlager 10, anzubringen. Mit Unterdruck beaufschlagte Saugnäpfe oder auch mit Überdruck beaufschlagte Saugnäpfe 92, die von einem Riss 50 unterwandert werden, haben eine deutlich detektierbare Leckage. Es könnte eine Reihe von Saugnäpfen über eine gemeinsame Versorgungsleitung verbunden werden. Über eine zentrale Pumpe mit Drucksensor lässt sich feststellen, ob einer der Saugnäpfe von einem Riss unterwandert ist. Eine zyklische Überwachung, zum Beispiel täglich, wäre ausreichend. Die Saugnäpfe könnten sogar an der Dichtkante festgeklebt werden, um die Grundleckage gering zu halten.

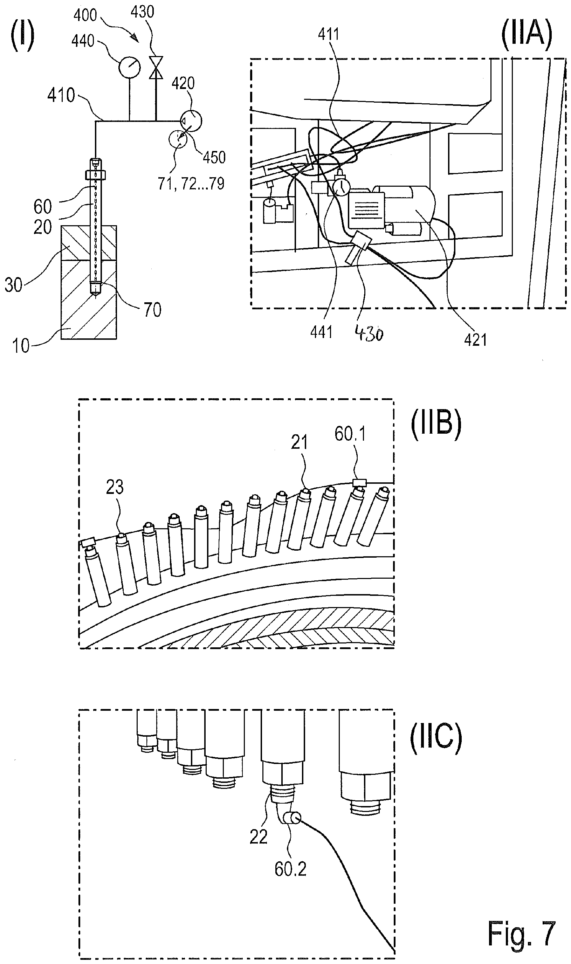

Fig. 7 zeigt in einer Ansicht I den prinzipiellen Aufbau einer überwachten Bauteilverbindung, wobei wiederum für identische oder ähnliche Teile oder Teile identischer oder ähnlicher Funktion gleiche Bezugszeichen verwendet sind, so dass auf die vorliegende Beschreibung verwiesen ist. Zusätzlich gezeigt ist ein Prüfsystem 400 mit einer Druckleitung 410 zur Durchführung 60. Auf der anderen Seite ist die Druckleitung 410 an einen Kompressor oder dergleichen Druckquelle 420 angeschlossen, welche die Durchführung 60 über die Druckleitung 410 je nach Stellung eines Schaltventils 430 mit Prüfdruck beaufschlagen kann. Der Prüfdruck p kann über eine Druckmesseinrichtung 440 abgegriffen werden. Die Beaufschlagung von einer Anzahl von weiteren Druckleitungenähnlich wie die Druckleitung 410-- kann über einen Verteilerschalter oder dergleichen Druckschaltelement, wie beispielsweise einen Ventilverteiler oder dergleichen --hier als Verteiler 450 bezeichnet-- vorgenommen werden. Auf diese Weise kann eine Anzahl von weiteren Durchführungen zusätzlich zur Durchführung 60 mit Druckluft beaufschlagt werden. Das können Verbindungsaufnahmen 71, 72 usw. bis 79 oder mehr hier nicht bezeichnete Verbindungsaufnahmen sein (z.B. zwölf Verbindungsaufnahmen), die entsprechend einer Winkelverteilung --z.B. alle 30° eine Verbindungsaufnahme-- ausgesucht sind.

Fig. 7 zeigt in Ansicht IIA bis IIC im Einzelnen Ausführungen der Komponenten der Fig. 7 I. Fig. 7 II (A) zeigt eine Pumpe 421 zur Bildung einer Druckquelle sowie ein Barometer 441 zur Bildung eines Druckmessinstruments 440. Über ein Schaltventil 430 lässt sich ein Leitungssystem 411 mit Druckluft beaufschlagen. Das Leitungssystem 411 ist in Fig. 7 II (B) näher dargestellt und verbindet jedes zehnte Verbindungsteil 20 in Form einer Schraube zur Beaufschlagung je an einer Durchführung 60 und einer Verbindungsaufnahme 70 mit Druckluft. Die Anschlussstellen in Form von T-Stücken 60.1 oder Endstücken 60.2 zu den angeschlossenen Schraubbolzen 21, 22, 23 sind in Fig. 7 II (B) und Fig. 7 II (C) beispielhaft gezeigt.

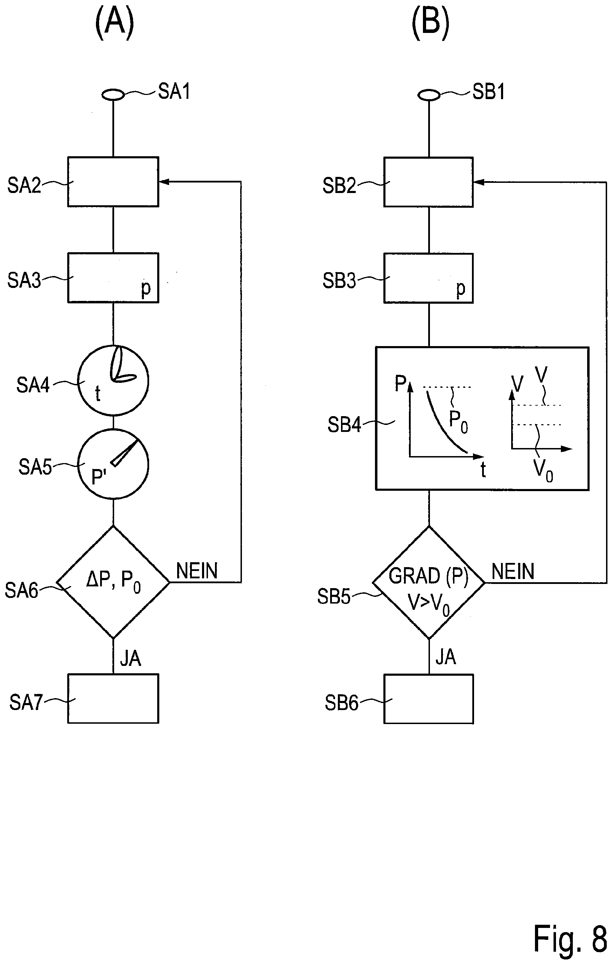

Fig. 8 zeigt in Ansicht A eine erste bevorzugte Ausführungsform eines Verfahrens zur Überwachung einer Bauteilverbindung auf eine ungewollte Verbindungsschwäche der Bauteilverbindung im verbundenen Zustand. Dazu wird in einem ersten Schritt SA1 ein Druckprüfsystem 400 an die Bauteilverbindung --beispielsweise eine Bauteilverbindung 100, 101-103 der zuvor beschriebenen Figuren-- angeschlossen. In einem weiteren Schritt SA2 wird das System entlüftet und in einem dritten Schritt SA3 wird durch Betrieb einer Druckquelle wie beispielsweise einer Pumpe 421 eine Verbindungsaufnahme 70 der Bauteilverbindung 100, 101-103 mit Prüfdruck p beaufschlagt. In einem vierten Schritt SA4 wird ein Zähler, insbesondere hier ein Zeitzähler gestartet, nach Ablauf einer Messzeit t wird ein Druck P' gemessen. Sollte der Druck P' nach der Zeit t vom Prüfdruck p um eine signifikante Fehlerabweichung abweichen, die ausreichend ist, eine Verbindungsschwäche der Bauteilverbindung im verbundenen Zustand anzuzeigen, dann wird davon ausgegangen, dass die Bauteilverbindung im verbundenen Zustand einen erheblichen Defekt aufweist, d. h. einen klaffenden Riss aufweist oder sich inakzeptabel gelöst hat. Eine signifikante Fehlerabweichung liegt beispielsweise vor, wenn ein abgegriffener Druck p' vom Prüfdruck p (Überdruck) des Schrittes SA3 im Schritt SA6 um einen Wert abweicht, der größer als ΔP ist (z.B. um mehr als ΔP unter dem Prüfdruck liegt) oder wenn der abgegriffene Druck p' unter einem Schwelldruck von P₀ liegt. In dem Fall kann in einem siebten Schritt SA7 beispielsweise über ein Funksignal oder eine feste Datenverbindung ein Alarm oder ein sonstiges Prüfsignal gegeben werden. In diesem Fall kann das Verfahren bevorzugt an einer Windenergieanlage 1000 der Fig. 1 umgesetzt werden, so dass an zentraler Stelle eine Fehlerüberwachung der Windenergieanlagen bzw. in einer Vielzahl von Windenergieanlagen 1000 erfolgen kann. Dazu eignet sich Prüfnetz mit einer Vielzahl von überwachten Bauteilverbindungen 100, 101, 102, 103, insbesondere einer Vielzahl von Windenergieanlagen 1000 und mit einer zentralen Prüfstelle, die zum Empfang eines Prüfsignals ausgebildet ist, insbesondere zum drahtlosen Empfang eines Prüfsignals von einem Prüf- und Überwachungssystem der Fig. 7 zur überwachten Bauteilverbindung.

In Fig. 8B ist eine Abwandlung des Überwachungsverfahrens beschrieben, welches in einem ersten Schritt SB1 ein Prüfdrucksystem 400 an eine Bauteilverbindung 100, 101-103 der Fig. 2 bis Fig. 7 anschließt. In einem zweiten Schritt SB2 wird das Prüfdrucksystem 400 sowie die Bauteilverbindung 100, 101-103 d. h. die Verbindungsaufnahme 70 und die Durchführung 60 entlüftet. In einem dritten Schritt SB3 wird das System und die Verbindungsaufnahme 70 mit einem Prüfdruck p beaufschlagt. In einem Schritt SB4 wird als Funktion der Zeit t der Verlauf des abgegriffenen Prüfdrucks p' --d. h. eine Funktion p(t)-- aufgenommen. Natürlich kann in einer Abwandlung auch der Prüfdruck p auf einen Wert p₀ gehalten werden und dann gemessen werden, ob ein signifikanter Volumenstrom V oberhalb eines Schwellstroms V₀ bei der Druckquelle aufgewendet werden muss, um den Druck p auf p₀ aufrechtzuerhalten. In einem Schritt SB5 wird beispielsweise festgestellt, ob im ersten Fall der Druckabfall GRAD(p) oberhalb eines erlaubten Druckgradienten GRAD0 (p) liegt. Im zweiten Fall kann geprüft werden, ob der aufzuwendende Volumenstrom V oberhalb eines Schwellstroms V₀ liegt, um eine bestimmte Druckamplitude p₀ aufrecht zu erhalten. Ist dies der Fall, kann in einem sechsten Schritt SB6 auf eine Fehlerabweichung erkannt werden, die ausreichend ist, eine Verbindungsschwäche der Bauteilverbindung im verbundenen Zustand anzuzeigen. In dem Fall kann wiederum eine Zentrale oder dergleichen über eine Fehlfunktion bzw. eine Verbindungsschwäche oder eine inakzeptable Beschädigung der Bauteilverbindung 100, 101-103 einer Windenergieanlage 1000 unterrichtet werden.

In beiden Verfahren der Fig. 8A und Fig. 8B kann entlang eines Pfades "JA" auch unmittelbar ein Service unterrichtet werden, bzw. das Stilllegen der Anlage veranlasst werden, um eine genauere Sichtung der Anlagenbedingungen vorzunehmen und gegebenenfalls Reparaturmaßnahmen einzuleiten. Entlang eines Pfades "NEIN" kann andernfalls --d. h für den Fall, dass eine Fehlerabweichung nicht gegeben ist-- ein Zyklus eingeleitet werden, der die Schritte SA2 bis SA6 bzw. SB2 bis SB5 wiederholt.

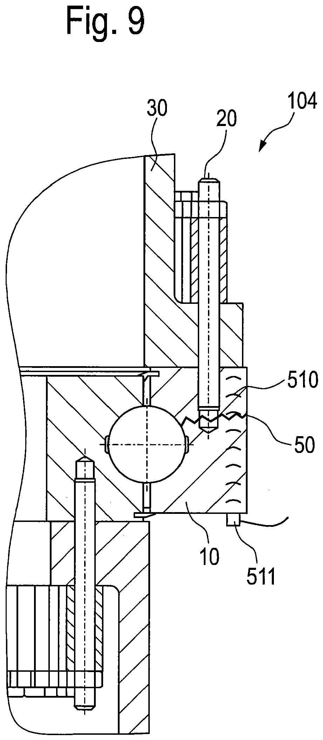

Fig. 9 bis Fig. 12 zeigen weitere Ausführungsformen gemäss Varianten des Konzepts, nämlich Fig. 9 eine weitere Bauteilverbindung 104 bei einer Windenergieanlage 1000, wobei auf die Beschreibung der Fig. 2 bis Fig. 4 mit Hinweis auf identische oder ähnliche Teile mit gleichem Bezugszeichen Bezug genommen ist. In einer hier dargestellten Abwandlung der Fig. 9 und der Fig. 10, Fig. 11 und Fig. 12 für ein erweitertes Überwachungsverfahren ist vorgesehen, dass eine Brücke zwischen dem ersten und zweiten Bauteil 30, 10 mit einem Prüfmaß beaufschlagt wird. Ein Überwachen des Prüfmaßes auf eine Fehlerabweichung kann dann erfolgen. Sollte die Fehlerabweichung ausreichend hoch sein, um eine Verbindungsschwäche der Bauteilverbindung im verbundenen Zustand anzuzeigen, kann eine Servicemaßnahme oder ein Abschalten einer Windenergieanlage 1000 zur Reparatur vorgenommen werden. Die Fig. 9 bis Fig. 12 zeigen vorliegend Alternativen, die im Wesentlichen darauf abstellen, dass eine Brücke zwischen dem ersten und zweiten Bauteil maßgeblich ist, um einen Defekt festzustellen, was deswegen mit einem Prüfmaß festgestellt werden kann. Dies ist insbesondere eine Längenänderung zwischen dem ersten und zweiten Bauteil 30, 10, nämlich beispielsweise dem Blattflansch und dem Blattflanschlager. Das Verbindungsteil 20 bzw. die Verbindungsaufnahme 70 spielt bei den in Fig. 9 bis Fig. 12 beispielhaft dargestellten Konzepten demnach eine nachgeordnete Rolle; vielmehr wird hier der Abstand zwischen den Bauteilen 10, 30, --hier dem Blattflansch und dem Blattflanschlager-- maßgeblich.

Gemäß Fig. 9 kann eine Messanordnung 510 mit einer Ultraschall-Messeinheit 511 an der Bauteilverbindung 104 vorgesehen sein. Grundsätzlich besteht nämlich die Möglichkeit zur Prüfung mittels akustischen Verfahrens, ob sich der Abstand zwischen dem Blattflansch und dem Blattflanschlager (Bauteile 30, 10) verändert hat. Analog zur akustischen Verfahren oder Klangproben könnte einer Veränderung der Eigenfrequenz oder deren Funk des angerissenen System erkannt werden. Grundsätzlich eignen sich auch nicht akustische Verfahren, wie optische Verfahren oder Laserverfahrens oder dergleichen, um einen Abstand zwischen Blattflansch und Blattflanschlager des ersten und zweiten Bauteils 30, 10 festzustellen. Grundsätzlich kann so der Abstand zwischen einer Flanschfläche des Blattflanschlagers zu einer Flanschfläche des Rotorblatts überwacht werden. Als Referenz kann auch eine Fläche des Nabenadapters 300 dienen. Ähnlich kann das in Fig. 9 dargestellte Ultraschallverfahren eine Bestrahlung des Blattflanschlagers 10 vornehmen, beispielsweise von unten. So kann eine Rückwandecho vom Blattflansch 30 bzw. einer Grenze desselben zum Blattflanschlager erkannt werden. Eventuell können mehrere Schwinger 511 an einem Auswertegerät parallel betrieben werden. Alternativ ist auch eine Detektion über einen Wickelkopf denkbar.

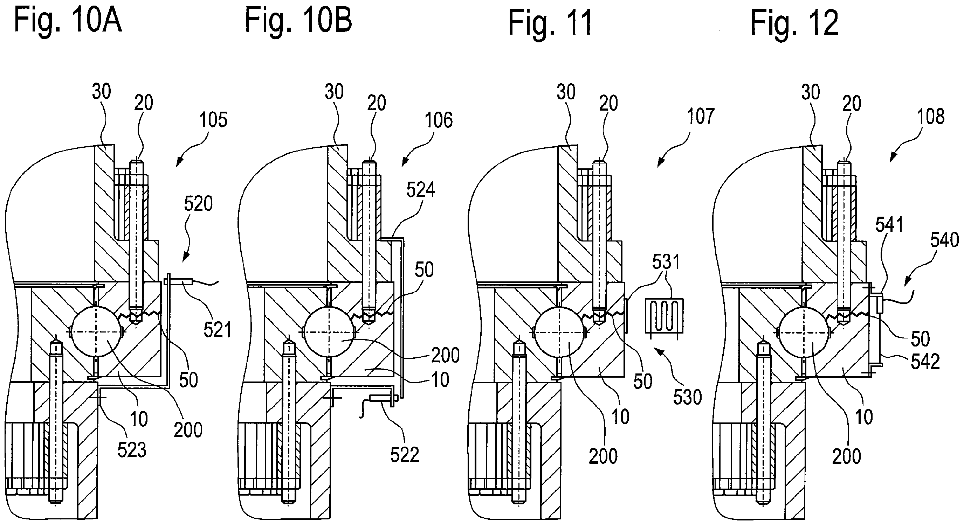

Fig. 10 zeigen in Ansicht A und Ansicht B zwei verschiedene Möglichkeiten einen Abstand zwischen Blattflansch 30 und Blattflanschlager 10 über Pulsoren 521, 522 festzustellen. Dazu weist eine Messanordnung 520 einen ersten Pulsor 521 bzw. 522 und einen Messpunkt auf, die als Sender-Empfänger funktionieren. Über mehrere Pulsoren am Umfang könnte beim Nabenadapter gegen die Kante zum Blattflansch gemessen werden. Über die Pulsoren 521, 522 kann automatisch auch ein Bruch der Verschraubung, d. h. der Bauteilverbindung 105, 106 des Blattflanschlagers 10 festgestellt werden. Die Messkette ließe sich auch bis zur Oberkante des Blattflansches 30 erweitern, wie dies in Fig. 10B dargestellt ist. Damit wären auch Verschraubungsbrüche in der Blattflanschverschraubung überwacht.

Fig. 11 zeigt eine weitere überwachte Bauteilverbindung 107 mit einer Ruhestromschleife, beispielsweise mit einer Messanordnung 530, die einen Dehnungsmessstreifen 531 hat. Durch Aufbringen einer mäanderförmigen Ruhestromschleife um den zu betrachtenden Schadensbereich kann eine Überwachung erfolgen. Insbesondere kann die Ruhestromschleife als Dehnungsmessstreifen verklebt werden. Anstatt eines Dehnungsmessstreifens 531 kann auch ein einfacher Folienträger mit z. B. aufgedämpfter Leiterwaren oder dergleichen verwendet werden.

Fig. 12 zeigt eine weitere überwachte Bauteilverbindung 108 mit einer Messanordnung 540, die eine elektrische und/oder magnetische Widerstandsmesseinheit umfasst. Insbesondere ist vorliegend als vergleichsweise einfache Realisierung ein Mikroschalter 541 realisiert. Über ein Mikroschalter in einer Ruhestromschleife könnten, die mit einem Riss verbundenen Wegänderungen im Bereich von 1 bis 2 mm erfasst werden, beispielsweise. Es werden mehrere Mikroschalter am Innen- und Außendurchmesser vorteilhaft sein. Vorzugsweise kann ein Stößel 542 vorgesehen sein, um einen vergleichsweise breiten Bereich überwachen zu können. Sollte sich ein Riss 50 der zuvor beschriebenen Art im Blattflanschlager 10 ausbilden, würde der Mikroschalter 541 mit Stößel 542 --hier insbesondere im gefährdeten Bereich des Drehlagers 200 angeordnet-- den Kontakt unterbrechen und so den Defekt anzeigen.

### Bezugszeichenliste:

- 0: Schwellstrom
- 1: Turm
- 2: Gondel
- 3: Rotor
- 3.1, 3.2, 3.3: drei Rotorblätter
- 4: Spinner
- 5: Nabe
- 7: Generator
- 8: Blattlager
- 9: Nabenadapter
- 30: erstes Bauteil, insbesondere Blattflanschlager
- 20: Verbindungsteil, insbesondere Schraubbolzen
- 21, 22, 23: Schraubbolzen
- 10: zweites Bauteil, insbesondere Blattflansch
- 40: Verbindungsaufnahme
- 50: Riss, insbesondere Rissbildung, Öffnung od. dgl.
- 60: Durchführung
- 60.1: T-Stück
- 60.2: Endstück
- 61: Mittelachse
- 70: Verbindungsaufnahme, insbesondere Sackloch
- 70': Verbindungsaufnahme
- 71-79: Verbindungsaufnahmen
- 80: Dichtungsbereich
- 90: Grenzbereich
- 91: Schmierbohrung
- 92: Druck- oder Saugnäpfe
- 100, 101, 102, 103: Bauteilverbindung
- 104, 105, 106, 107, 108: Bauteilverbindung
- 200: Drehlager
- 300: Nabenadapter
- 400: Prüfsystem, insbesondere Druckprüfsystem
- 410: Druckleitung
- 411: Leistungssystem
- 420: Druckquelle
- 421: Pumpe
- 430: Schaltventil
- 440: Druckmess-Einrichtung, insbesondere -Instrument
- 441: Barometer
- 450: Verteiler
- 510: erste Messanordnung
- 520: zweite Messanordnung
- 521: erster Pulsor
- 522: zweite Pulsor
- 523, 524: Messpunkt
- 530: dritte Messanordnung
- 531: Dehnungsmessstreifen
- 540: vierte Messanordnung
- 541: Mikroschalter
- 542: Stößel
- 1000: Windenergieanlage

- p: Prüfdruck
- p': abgegriffener Prüfdruck
- P₀: Schwelldruck
- ΔP: Druckdifferenz
- p0: Druckamplitude

- SA1-SA7: erster bis siebter Schritt der ersten Variante
- SB1-SB6: erster bis sechster Schritt der zweiten Variante
- t: Messzeit
- V: Volumenstrom
- V₀: Schwellstrom

## Patentansprüche

1. Überwachte Bauteilverbindung (100) mit
- einem ersten, ein Halteteil bildendes, Bauteil (10),
- einem zweiten, ein Aufnahmeteil bildendes, Bauteil (30),
- einem Verbindungsteil (20), welches das zweite Bauteil (30) an dem ersten Bauteil (10) im verbundenen Zustand hält, wobei das Verbindungsteil (20) in eine Verbindungsaufnahme (70) des Aufnahmeteils (30) eingreift; **dadurch gekennzeichnet, dass** zum Überwachen auf einer ungewollten Verbindungsschwäche der Bauteilverbindung (100) im verbundenen Zustand
- die Verbindungsaufnahme (70) mit einem Prüfdruck (p) beaufschlagbar ist, und
- der Prüfdruck (p) auf eine Fehlerabweichung überwachbar ist, die ausreichend ist, eine Verbindungsschwäche der Bauteilverbindung (100) im verbundenen Zustand anzuzeigen, und
- das Verbindungsteil (20) eine Durchführung (60) aufweist, die mit einer Druckquelle (420) zur Prüfdruck-Beaufschlagung verbindbar ist und die zur Verbindungsaufnahme (70) führt.

2. Überwachte Bauteilverbindung nach Anspruch 1,
**dadurch gekennzeichnet, dass** ein Zwischenraum zwischen dem Verbindungsteil (20) und wenigstens einem des ersten und/oder zweiten Bauteils (10, 30) eine Durchführung (60) bildet, die mit einer Druckquelle (420) zur Prüfdruck-Beaufschlagung verbindbar ist und/oder die zur Verbindungsaufnahme (40) führt.

3. Überwachte Bauteilverbindung nach einem der Ansprüche 1 oder 2,
**dadurch gekennzeichnet, dass** die Bauteilverbindung (100) eine Lagerverbindung ist und/oder in Form einer Schraubverbindung zwischen einem Flansch und einem Flanschlager gebildet ist.

4. Windenergieanlage (1000) mit einer überwachten Bauteilverbindung (100) nach einem der Ansprüche 1 bis 3.

5. Windenergieanlage (1000) nach Anspruch 4 mit einem Turm (1), einer Gondel (2) und einer mit einem Generator (7) verbundenen Welle in der Gondel (2), wobei die Welle über eine Anzahl von mit der Welle über eine Nabe (5) verbundenen Rotorblättern (3.1, 3.2, 3.3) eines Rotors (3) antreibbar ist, und wobei ein Rotorblatt (3.1, 3.2, 3.3) über ein Blattlager (8) mit einem Nabenadapter (9) verbunden ist,
**dadurch gekennzeichnet, dass** eine überwachte Bauteilverbindung (100) nach einem der vorhergehenden Ansprüche am Rotor (3) und/oder der Nabe (5) gebildet ist.

6. Windenergieanlage (1000) nach Anspruch 4 oder 5, **dadurch gekennzeichnet, dass** das Halteteil (10) in Form eines Blattflansches das Aufnahmeteil (30) in Form des Blattflanschlagers und das Verbindungsteil (20) in Form einer Schraubverbindung zwischen dem Blattflansch und dem Blattflanschlager gebildet ist.

7. Verfahren zur Überwachung einer Bauteilverbindung (100) auf eine ungewollte Verbindungsschwäche der Bauteilverbindung (100) im verbundenen Zustand, wobei die Bauteilverbindung (100) mit
- wenigstens einem ersten, ein Halteteil bildendes, Bauteil (10),
- wenigstens einem zweiten, ein Aufnahmeteil (30) bildendes, Bauteil (30),
- wenigstens einem Verbindungsteil (20), welches das zweite Bauteil (30) an dem ersten Bauteil (10) im verbundenen Zustand hält, wobei das Verbindungsteil (20) in eine Verbindungsaufnahme (40) des Aufnahmeteils (30) eingreift, wobei das Verbindungsteil (20) eine Durchführung (60) aufweist, die mit einer Druckquelle (420) zur Prüfdruck-Beaufschlagung verbindbar ist und die zur Verbindungsaufnahme (40) führt; aufweisend die Schritte:
- Beaufschlagen der Verbindungsaufnahme (40) mit einem Prüfdruck (p)
- Überwachen des Prüfdrucks (p) auf eine Fehlerabweichung, die ausreichend ist, eine Verbindungsschwäche der Bauteilverbindung im verbundenen Zustand anzuzeigen,
wobei die Verbindungsaufnahme getaktet mit einem Prüfdruck beaufschlagt wird.

8. Verfahren nach Anspruch 7, weiter aufweisend den Schritt:
- Aussenden eines Prüfsignals im Falle einer Fehlerabweichung zu einer zentralen Prüfstelle und/oder automatisches Anhalten einer Windenergieanlage (1000) im Falle einer Fehlerabweichung.

9. Verfahren zur Überwachung einer Bauteilverbindung (100) auf eine ungewollte Verbindungsschwäche der Bauteilverbindung (100) im verbundenen Zustand nach Anspruch 7 oder 8, **dadurch gekennzeichnet, dass** der Prüfdruck (p) anhaltend mit vorbestimmter Amplitude (p₀) aufgebracht wird und
- auf eine Fehlerabweichung erkannt wird, wenn ein Volumenstrom (V) oberhalb einer Volumenschwelle (V₀) liegt, um die Amplitude (p₀) zu halten und/oder
- überprüft wird, ob ein Fehlerschwellwert erreicht wurde oder andernfalls ein ursprünglich aufgebrachter Prüfdruck (p) im Wesentlichen erhalten ist.

10. Verfahren zur Überwachung einer Bauteilverbindung (100) auf eine ungewollte Verbindungsschwäche der Bauteilverbindung (100) im verbundenen Zustand nach einem der Ansprüche 7 bis 9, wobei der Prüfdruck (p) einmalig mit vorbestimmter Amplitude (p₀) aufgebracht wird und ein Abfallverhalten des Prüfdrucks (p) von der Amplitude (p₀) überwacht wird und auf eine Fehlerabweichung erkannt wird, wenn das Abfallverhalten zeitlich und/oder wertmäßig jenseits einer Rampenschwelle liegt.

11. Prüfnetz mit einer Vielzahl von überwachten Bauteilverbindungen (100) nach einem der Ansprüche 1 bis 3 und mit einer zentralen Prüfstelle, die zum Empfang eines Prüfsignals ausgebildet ist, und/oder zum drahtlosen Empfang eines Prüfsignals von einem Prüf- und Überwachungssystem zur überwachten Bauteilverbindung (100).

12. Prüfnetz nach Anspruch 11, wobei die Vielzahl von überwachten Bauteilverbindungen (100) einer Vielzahl von Windenergieanlagen (1000) nach einem der Ansprüche 4 bis 6 zugeordnet sind.

## Claims

1. Monitored component connection (100) having
- a first component (10) which forms a retention member,
- a second component (30) which forms a receiving member,
- a connection member (20) which retains the second component (30) on the first component (10) in the connected state, wherein the connection member (20) engages in a connection receiving member (70) of the receiving member (30); **characterised in that**, in order to monitor for an undesirable connection weakness of the component connection (100) in the connected state,
- the connection receiving member (70) can be acted on with a test pressure (p)
and
- the test pressure (p) can be monitored for an error deviation which is sufficient to indicate a connection weakness of the component connection (100) in the connected state, and
- the connection component (20) has a duct (60) which can be connected to a pressure source (420) for test pressure application and which leads to the connection receiving member (70).

2. Monitored component connection according to claim 1,
**characterised in that** an intermediate space between the connection component (20) and at least one of the first and/or second component (10, 30) forms a duct (60), which can be connected to a pressure source (420) for test pressure application and/or which leads to the connection receiving member (40).

3. Monitored component connection according to either claim 1 or claim 2, **characterised in that** the component connection (100) is a bearing connection and/or is formed in the form of a screw connection between a flange and a flange bearing.

4. Wind turbine (1000) having a monitored component connection (100) according to any one of claims 1 to 3.

5. Wind turbine (1000) according to claim 4, having a tower (1), a pod (2) and a shaft which is connected to a generator (7) in the pod (2), wherein the shaft can be driven by means of a number of rotor blades (3.1, 3.2, 3.3) of a rotor (3) which are connected to the shaft by means of a hub (5), and wherein a rotor blade (3.1, 3.2, 3.3) is connected to a hub adapter (9) by means of a blade bearing (8),
**characterised in that** a monitored component connection (100) according to any one of the preceding claims is formed on the rotor (3) and/or the hub (5).

6. Wind turbine (1000) according to claim 4 or claim 5,
**characterised in that** the retention member (10) is formed in the form of a blade flange, the receiving member (30) is formed in the form of the blade flange bearing and the connection component (20) is formed in the form of a screw connection between the blade flange and the blade flange bearing.

7. Method for monitoring a component connection (100) for an undesirable connection weakening of the component connection (100) in the connected state, wherein the component connection (100) having
- at least a first component (10) which forms a retention member,
- at least a second component (30) which forms a receiving member (30),
- at least one connection member (20) which retains the second component (30) on the first component (10) in the connected state, wherein the connection member (20) engages in a connection receiving member (40) of the receiving member (30), wherein the connection member (20) has a duct (60) which can be connected to a pressure source (420) for test pressure application and which leads to the connection receiving member (40);
having the steps of:
- acting on the connection receiving member (40) with a test pressure (p),
- monitoring the test pressure (p) for an error deviation which is sufficient to indicate a connection weakness of the component connection in the connected state, wherein the connection receiving member is acted on with a test pressure in a timed manner.

8. Method according to claim 7, further having the step of:
- transmitting a test signal in the event of an error deviation to a central test location and/or automatically stopping a wind turbine (1000) in the event of an error deviation.

9. Method for monitoring a component connection (100) for an undesirable connection weakness of the component connection (100) in the connected state according to claim 7 or 8, **characterised in that** the test pressure (p) is applied continuously with a predetermined amplitude (p₀) and
- an error deviation is identified when a volume flow (V) is above a volume threshold (V₀) in order to maintain the amplitude (p₀) and/or
- it is verified whether an error threshold value has been reached or otherwise an originally applied test pressure (p) is substantially obtained.

10. Method for monitoring a component connection (100) for an undesirable connection weakness of the component connection (100) in the connected state according to any one of claims 7 to 9, wherein the test pressure (p) is applied once with a predetermined amplitude (p₀) and a drop behaviour of the test pressure (p) from the amplitude (p₀) is monitored and an error deviation is identified when the drop behaviour is in terms of time or value beyond a ramp threshold.

11. Test network having a large number of monitored component connections (100) according to any one of claims 1 to 3 and having a central test location which is constructed to receive a test signal, and/or for wirelessly receiving a test signal from a testing and monitoring system for the monitored component connection (100).

12. Test network according to claim 11, wherein the large number of monitored component connections (100) are associated with a large number of wind turbines (1000) according to any one of claims 4 to 6.

## Revendications

1. Connexion de composants contrôlée (100) avec
- un premier composant (10) formant une pièce de maintien,
- un deuxième composant (30) formant une pièce de réception,
- une pièce de connexion (20), laquelle maintient le deuxième composant (30) au niveau du premier composant (10) à l'état connecté, dans laquelle la pièce de connexion (20) entre en prise dans une réception de connexion (70) de la pièce de réception (30) ;
**caractérisée en ce que** pour le contrôle d'une faiblesse de connexion non souhaitée de la connexion de composants (100) à l'état connecté
- la réception de connexion (70) peut être sollicitée par une pression d'essai (p),
et
- la pression d'essai (p) peut être contrôlée quant à un écart d'erreur, qui est suffisant pour indiquer une faiblesse de connexion de la connexion de composants (100) à l'état connecté, et
- la pièce de connexion (20) présente une traversée (60), qui peut être reliée à une source de pression (420) pour la sollicitation en pression d'essai et qui conduit à la réception de connexion (70).

2. Connexion de composants contrôlée selon la revendication 1,
**caractérisée en ce qu'**un espace entre la pièce de connexion (20) et au moins un parmi le premier et/ou deuxième composant (10, 30) forme une traversée (60), qui peut être reliée à une source de pression (420) pour la sollicitation en pression d'essai et/ou qui conduit à la réception de connexion (40).

3. Connexion de composants contrôlée selon l'une quelconque des revendications 1 ou 2,
**caractérisée en ce que** la connexion de composants (100) est une connexion de palier et/ou est réalisée sous forme de connexion vissée entre une bride et un palier de bride.

4. Eolienne (1000) avec une connexion de composants contrôlée (100) selon l'une quelconque des revendications 1 à 3.

5. Eolienne (1000) selon la revendication 4 avec un mât (1), une nacelle (2) et un arbre relié à un générateur (7) dans la nacelle (2), dans laquelle l'arbre peut être entraîné par le biais d'un nombre de pales de rotor (3.1, 3.2, 3.3) d'un rotor (3) reliées à l'arbre par le biais d'un moyeu (5), et dans laquelle une pale de rotor (3.1, 3.2, 3.3) est reliée à un adaptateur de moyeu (9) par le biais d'un palier de lame (8),
**caractérisée en ce qu'**une connexion de composants contrôlée (100) selon l'une quelconque des revendications précédentes est formée au niveau du rotor (3) et/ou du moyeu (5).

6. Éolienne (1000) selon la revendication 4 ou 5, **caractérisée en ce que** la pièce de maintien (10) est réalisée sous forme de bride de lame, la pièce de réception (30) sous forme de palier de bride de lame et la pièce de connexion (20) sous forme de connexion vissée entre la bride de lame et le palier de bride de lame.

7. Procédé pour contrôler une connexion de composants (100) quant à une faiblesse de connexion non souhaitée de la connexion de composants (100) à l'état connecté, dans lequel la connexion de composants (100) avec
- au moins un premier composant (10) formant une pièce de maintien,
- au moins un deuxième composant (30) formant une pièce de réception (30),
- au moins une pièce de connexion (20), laquelle maintient le deuxième composant (30) au niveau du premier composant (10) à l'état connecté, dans lequel la pièce de connexion (20) entre en prise dans une réception de connexion (40) de la pièce de réception (30), dans lequel la pièce de connexion (20) présente une traversée (60), qui peut être reliée à une source de pression (420) pour la sollicitation en pression d'essai et qui conduit à la réception de connexion (40) ;
présentant les étapes de :
- sollicitation de la réception de connexion (40) par une pression d'essai (p),
- contrôle de la pression d'essai (p) quant à un écart d'erreur, qui est suffisant pour indiquer une faiblesse de connexion de la connexion de composants à l'état connecté,
dans lequel la réception de connexion est sollicitée de manière cadencée à une pression d'essai.

8. Procédé selon la revendication 7, présentant en outre l'étape de :
- émission d'un signal d'essai dans le cas d'un écart d'erreur à un poste d'essai central et/ou arrêt automatique d'une éolienne (1000) dans le cas d'un écart d'erreur.

9. Procédé pour contrôler une connexion de composants (100) quant à une faiblesse de connexion non souhaitée de la connexion de composants (100) à l'état connecté selon la revendication 7 ou 8, **caractérisé en ce que** la pression d'essai (p) est appliquée durablement avec une amplitude prédéfinie (p₀), et
- un écart d'erreur est identifié, lorsqu'un débit volumique (V) est supérieur à un seuil de volume (V₀) pour maintenir l'amplitude (p₀) et/ou
- il est vérifié si une valeur seuil d'erreur a été atteinte ou dans le cas contraire une pression d'essai (p) appliquée initialement est sensiblement obtenue.

10. Procédé pour contrôler une connexion de composants (100) quant à une faiblesse de connexion non souhaitée de la connexion de composants (100) à l'état connecté selon l'une quelconque des revendications 7 à 9, dans lequel la pression d'essai (p) est appliquée une fois avec une amplitude prédéfinie (p₀) et un comportement de diminution de la pression d'essai (p) est contrôlé par l'amplitude (p₀) et un écart d'erreur est identifié, lorsque le comportement de diminution se situe au-delà d'un seuil de rampe du point de vue du temps et/ou de la valeur.

11. Réseau d'essai avec une pluralité de connexions de composants contrôlées (100) selon l'une quelconque des revendications 1 à 3 et avec un poste d'essai central, qui est réalisé pour la réception d'un signal d'essai, et/ou pour la réception sans fil d'un signal d'essai d'un système d'essai et de contrôle à la connexion de composants contrôlée (100).

12. Réseau d'essai selon la revendication 11, dans lequel la pluralité de connexions de composants contrôlées (100) est affectée à une pluralité d'éoliennes (1000) selon l'une quelconque des revendications 4 à 6.
